Europäisches Patentamt

European Patent Office

Office européen des brevets

(19)

(11) Veröffentlichungsnummer : **0 005 188**
**B1**

(12) **EUROPÄISCHE PATENTSCHRIFT**

(45) Veröffentlichungstag der Patentschrift :
08.07.81

(51) Int. Cl.³ : **G 02 F   1/133**

(21) Anmeldenummer : **79101091.1**

(22) Anmeldetag : **09.04.79**

(54) **Flüssigkristallanzeigevorrichtung mit Orientierungsschicht und Verfahren zu ihrer Herstellung.**

(30) Priorität : 09.05.78 DE 2820219

(43) Veröffentlichungstag der Anmeldung :
14.11.79 (Patentblatt 79/23)

(45) Bekanntmachung des Hinweises auf die Patenterteilung : 08.07.81 Patentblatt 81/27

(84) Benannte Vertragsstaaten :
CH FR GB IT NL SE

(56) Entgegenhaltungen :
CH - A - 600 365
DE - A - 2 202 555
DE - A - 2 625 864
FR - A - 2 189 767
US - A - 4 049 338
PATENT ABSTRACTS OF JAPAN, Vol. 1, Nr. 108, 22. September 1977, Seite 3727E77

PATENT ABSTRACTS OF JAPAN, Vol. 2, Nr. 45, März 27. 1978, Seite 644E78

(73) Patentinhaber : SIEMENS AKTIENGESELLSCHAFT
Berlin und München
Postfach 22 02 61
D-8000 München 22 (DE)

(72) Erfinder : Heynisch, Hinrich, Dr.rer.nat., Dipl.-Phys.
Im Birket 7
D-8032 Gräfelfing (DE)
Erfinder : Krüger, Hans, Dipl.-Phys.
Peralohstrasse 13
D-8000 München 83 (DE)

Imprimerie Jouve, 17, rue du Louvre, 75001 Paris, France

EP 0 005 188 B1

## Flüssigkristallanzeigevorrichtung mit Orientierungsschicht und Verfahren zu ihrer Herstellung

Die Erfindung betrifft eine Flüssigkristallanzeigevorrichtung gemäß dem Oberbegriff des Anspruchs 1. Ein solches display ist aus der DE-OS 22 56 317 bekannt.

Arbeitet ein Flüssigkristalldisplay mit polarisiertem Licht, so enthält es gewöhnlich außen auf den beiden Trägerplatten aufgeklebte Polarisatorfolien mit einer joddotierten Polyvinylalkohol-Schicht. Die PVA-Schicht reagiert äußerst empfindlich auf die Umgebungsfeuchtigkeit und ist häufig dafür verantwortlich, daß die Anzeige schon nach relativ kurzer Zeit an Kontrast verliert und schließlich vollkommen unbrauchbar wird (vergl. hierzu DE-OS 25 44 940).

Es ist deshalb auch schon diskutiert worden, die Polarisatoren in das Zelleninnere hinein zu verlegen. Ideal wäre es, wenn eine solche Schicht nicht nur polarisieren sondern auch noch die benachbarten Flüssigkristallmoleküle ausrichten könnte. Die in dieser Richtung bisher unternommenen Versuche, beispielsweise charakteristische Deformationen von polymerhaltigen, mit einem dichroitischen Farbstoff versehenen Schichten (DE-OS 24 57 641 oder DE-OS 24 22 784) haben jedoch noch nicht zu befriedigenden Ergebnissen geführt.

Aufgabe der vorliegenden Erfindung ist es, eine Flüssigkristallzelle anzugeben, deren Orientierungsschicht nicht nur die benachbarten Flüssigkristallmoleküle zuverlässig ausrichtet sondern auch hindurchtretendes Licht linear polarisiert. Zu diesem Zweck ist erfindungsgemäß die im Patentanspruch 1 angegebene Flüssigkristallanzeigevorrichtung vorgesehen. Dabei könnten die leitenden Streifen auch aus einem Halbleitermaterial bestehen. Enthalten die Streifen einen dichroitischen Farbstoff, so sollten dessen Moleküle eine Vorzugsrichtung einnehmen.

Das Streifenmuster des vorgeschlagenen Displays wirkt als ein Gitterpolarisator. Ein solcher Polarisator läßt in einem relativ breiten Wellenlängenband nur diejenige Lichtkomponente passieren, die quer zur Streifenerstreckung schwingt. Die untere Grenzwellenlänge dieses Bandes ist durch den lichten Abstand zwischen nebeneinanderliegenden Streifen gegeben. In der Praxis sollte man sicherheitshalber den Streifenabstand kleiner, etwa nur halb so groß wie die Wellenlänge des kurzwelligsten Beleuchtungslichtanteils machen. Für nähere Einzelheiten bezuglich des Aufbaus und der Wirkungsweise eines Gitterpolarisators wird auf die US-PS 30 46 839 verwiesen.

Die Erfindung geht davon aus, daß sich für den Rillenabstand Werte finden lassen, die sowohl einen Gitterpolarisator mit hohem Polarisationsgrad für sichtbares Licht ermöglichen als auch eine einwandfreie Flüssigkristalltexturierung garantieren und dabei mit verfügbaren Materialien und Strahlungsquellen erzeugt werden können. Die Gitterkonstante eines Gitterpolarisators muß einige 10 tel µm betragen, der Rillenabstand einer Orientierungsschicht sollte kleiner als 10

µm sein und ein Interferenzmuster mit einem Linienabstand von weniger als 1 µm kann mit Wellenlängen im fernen UV bzw. im Bereich weicher Röntgenstrahlung erzeugt werden. Auch wenn die derzeit erhältlichen UV-bzw. Röntgenquellen mit monochromatischer Strahlung noch relativ leistungsschwach sind und man somit lange Belichtungszeiten benötigt, so wird dieser Umstand in vielen Fällen dadurch mehr als aufgewogen, daß die Polarisatoren der Luftfeuchtigkeit entzogen sind und ohne weiteres auf der Orientierungsschicht aufgebracht oder sogar im gleichen Fertigungsschritt mit der Orientierungsschicht hergestellt werden können.

Die Realisierung der Orientierungsschicht gestaltet sich um so einfacher, je größer die Gitterkonstante sein kann, d.h., je langwelliger das zur Beleuchtung verwendete Licht ist. Daher wird in Weiterbildung der Erfindung vorgeschlagen, die Flüssigkristallanzeige mit einem als Lichtfalle wirkenden Fluoreszenzkörper zu kombinieren, der das Anregungslicht für seine fluoreszierenden Partikel in einem engen, zu längeren Wellenlängen hin verschobenen Frequenzband wieder abgibt. Eine ausführliche Darstellung einer solchen Anzeigevorrichtung, die unter der Bezeichnung FLAD (« Fluoreszenzaktiviertes Display ») bekannt geworden ist, wird in DE-OS 25 54 226 oder in « Elektronik » 6 (1977) 55 gegeben.

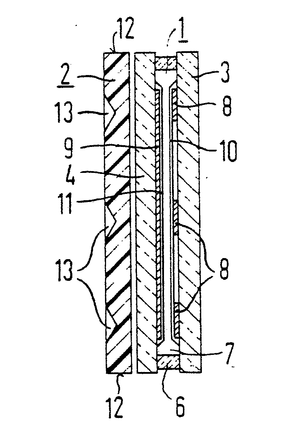

Die Erfindung soll nun anhand eines besonders bevorzugten Ausführungsbeispiels unter Bezugnahme auf die beigefügte Figur näher erläutert werden.

Die Figur zeigt in einem etwas schematisierten Seitenschnitt eine Sieben-Segment-Flüssigkristallanzeigevorrichtung, bestehend aus der eigentlichen Flüssigkristallzelle 1 und einer in Betrachtungsrichtung dahinter befindlichen Fluoreszenzplatte 2. Die Zelle enthält im einzelnen eine vordere Trägerplatte 3 und eine hintere Trägerplatte 4, die beide über einen Rahmen 6 dicht miteinander verbunden sind. Die vom Rahmen und den beiden Substraten begrenzte Kammer ist mit einer Flüssigkristallschicht 7 ausgefüllt. Die beiden Platten 3, 4 sind auf ihren Innenseiten jeweils mit leitenden Belägen (Elektrodensegmente 8, durchgehende Rückelektrode 9) sowie mit einer orientierenden und polarisierenden Schicht 10, 11, im folgenden einfach Orientierungsschicht genannt, versehen. Die Fluoreszenzplatte trägt auf ihren vier Seitenflächen jeweils eine Reflexionsschicht 12 und hat hinter jedem der Elektrodensegmente 8 ein Lichtaustrittsfenster in Form einer in die Plattenrückseite eingebrachten Einkerbung 13. Die Flüssigkristallzelle arbeitet im vorliegenden Fall als eine sog. Drehzelle mit gekreuzten Polarisatoren (DE-AS 21 58 563). Nähere Angaben über Beschaffenheit und Wirkungsweise der Fluoreszenzplatte ist der bereits zitierten FLAD-Literatur zu entnehmen. Das (nicht dargestellte) Ansteuerteil ist so ausgelegt, daß jeweils die nur zum Bildhintergrund gehörenden Elektrodensegmente aktiviert werden. Mit dieser « Komplementäransteuerung », die weniger Leistung als eine herkömmliche Adressierung verbraucht, entsteht eine in der Fluoreszenzfarbe leuchtende Ziffer auf dunklem Grund.

Die Orientierungsschicht läßt sich folgendermaßen relativ einfach herstellen :

Zunächst werden die Trägerplatten, die bereits mit ihren Elektrodenbelägen und ggf. mit einer Isolationsschicht versehen sind, mit einem Fotolack überzogen ; der Lack besteht aus einem Material, das nach einer Erwärmung elektrisch leitend wird. Es würde genügen, den Fotolack nur auf die Elektrodensegmente bzw. auf die entsprechenden Bereiche der Rückelektrode aufzutragen, denn nur in diesen Teilflächen muß die Schicht orientieren und polarisieren. Der Lacküberzug wird anschließend mit kohärenten Röntgenstrahlquellen belichtet, die auf der Lackoberfläche ein streifenförmiges Interferenzmuster ausbilden. Der Abstand zwischen benachbarten Intensitätsmaxima bzw. -minima der interferierenden Röntgenstrahlen sollte sicherheitshalber so bemessen sein, daß in der fertigen Orientierungsschicht die transparenten Bänder zwischen den leitenden Streifen eine Breite haben, die etwas kleiner ist als die kürzeste Wellenlänge des Fluoreszenzfarbenspektrums. Sodann ätzt man in üblicher Weise die Rillen aus dem Fotolack heraus, so daß praktisch nur noch zueinander parallele Wälle zurückbleiben. Dann wird der Lack erhitzt, bis er elektrisch leitend wird.

Es entsteht eine Struktur, die einerseits die angrenzenden Flüssigkristallmoleküle plattenparallel in Richtung des Rillenverlaufs orientiert und die andererseits das Beleuchtungslicht linear polarisiert. Ist dabei die Gitterkonstante so gewählt, daß sie sehr nahe an der Fluoreszenzbandkante liegt, so kann das (höherfrequente) Anregungslicht für die fluoreszierenden Partikel auch durch die Zelle hindurch in die Fluoreszenzplatte gelangen. Eine solche FLAD-Ausführung verfügt über einen besonders hohen Helligkeitskontrast.

Im geschilderten Beispiel ist die Flüssigkristallschicht einheitlich homogen orientiert. Bei Bedarf könnte man die Flüssigkristallmoleküle auch noch gegen die Trägerplattenebene neigen. Kleine Verkippungen stellen sich vor allem dann ein, wenn die Orientierungsschicht an geeigneten Stellen Erhebungen aufweist. Erhebungen in Form von regelmäßigen Rillenunterbrechungen ließen sich beispielsweise ohne weiteres durch ein modifiziertes Interferenzmuster schaffen Verkippt homöotrope Texturen verlangen in der Regel zusätzliche Maßnahmen ; einige Beispiele sind in IEEE Trans. Electron Devices ED-24 (1977) 807 angegeben.

Die Erfindung bietet zweifellos besondere Vorteile bei einer Drehzelle, denn die erfindungsgemäß erzeugten Textur- und Polarisationsachsen sind automatisch so aufeinander abgestimmt, daß entweder ein dunkles Bild auf hellem Grund oder — bei Erweiterung der Drehzelle zu einem FLAD — ein farbiges Bild auf dunklem Grund mit optimalem Kontrast entsteht. Denkbar sind aber auch Flüssigkristalldisplays, die mit einem anderen Darstellungsprinzip betrieben werden. Beispielsweise kommen Zellen infrage, deren Flüssigkristallschicht im Ruhezustand (verkippt) homöotrop orientiert ist und im eingeschalteten Zustand eine plattenparallele Textur mit einer 90°-Verdrillung in Richtung der Plattennormalen einnimmt (« inverse Drehzelle »). Schließlich könnte man in Rahmen der Erfindung auch komplexe Orientierungsschichten mit lokal unterschiedlichen Ausrichtwirkungen realisieren, etwa durch Nebeneinandersetzen von einzelnen homogen bzw. homöotrop orientierenden Teilschichten.

## Ansprüche

1. Flüssigkristallanzeigevorrichtung mit einer Flüssigkristall-Schicht zwischen zwei Trägerplatten, von denen zumindest die eine Trägerplatte mit einer die Flüssigkristallschicht orientierenden Schicht (Orientierungsschicht) versehen ist, deren Oberfläche ein Muster aus zueinander parallelen Rillen aufweist, dadurch gekennzeichnet, daß der Abstand zwischen benachbarten Rillen (« Strukturkonstante ») in der Größenordnung der Wellenlänge des Beleuchtungslichtes liegt und daß die Orientierungsschicht (10, 11) parallel zu den Rillen verlaufende Streifen aufweist, die aus einem elektrisch leitenden oder dichroitischen Material bestehen und mit einem der Strukturkonstante entsprechenden Abstand voneinander distanziert sind.

2. Flüssigkristallanzeigevorrichtung nach Anspruch 1, dadurch gekennzeichnet, daß sich die Streifen im Inneren der Orientierungsschicht (10,11) befinden.

3. Flüssigkristallanzeigevorrichtung nach Anspruch 1, dadurch gekennzeichnet, daß sich die Streifen auf der Oberfläche der Orientierungsschicht (10,11) befinden.

4. Flüssigkristallanzeigevorrichtung nach Anspruch 2, dadurch gekennzeichnet, daß die Streifen aus einem elektrisch leitenden Fotolack bestehen.

5. Flüssigkristallanzeigevorrichtung nach Anspruch 2, dadurch gekennzeichnet, daß die Streifen einen leitenden Zusatz, insbesondere Silber oder Gold, enthalten.

6. Flüssigkristallanzeigevorrichtung nach einem der Ansprüche 1 bis 5, dadurch gekennzeichnet, daß die Orientierungsschicht (10,11) zusätzliche Erhebungen, insbesondere regelmäßige Unterbrechungen der Rillen, aufweist.

7. Flüssigkristallanzeigevorrichtung nach einem der Ansprüche 1 bis 6, dadurch gekennzeichnet, daß sie eine Drehzelle umfaßt.

8. Flüssigkristallanzeigevorrichtung nach einem der Ansprüche 1 bis 7, dadurch gekennzeichnet, daß sie einen Fluoreszenzkörper (2) umfaßt, der aus einem Material mit einem Brechungsindex größer 1 besteht, fluoreszierende Partikel enthält und mit Lichtaustrittsfenstern (13) versehen ist, die den Anzeigesegmenten zugeordnet sind, und daß das Ansteuerteil die Elektrodensegmente komplementär ansteuert.

9. Verfahren zur Herstellung einer Flüssigkristallanzeigevorrichtung nach einem der Ansprüche 1 bis 8, dadurch gekennzeichnet, daß man zur Erzeugung der Orientierungsschicht (10, 11) die Trägerplatte (3, 4) mit einem lichtempfindlichen Material beschichtet und darin das Rillenmuster durch Belichtung mit interferierenden kohärenten Lichtquellen erzeugt, deren Strahlung Frequenzen im fernen UV bzw. im Bereich weicher Röntgenstrahlung haben.

10. Verfahren nach Anspruch 9, dadurch gekennzeichnet, daß man die Streifen durch schräges Aufdampfen von leitfähigem oder dichroitischem Material auf die Orientierungsschicht (10, 11) erzeugt.

## Claims

1. A liquid crystal display device having a liquid crystal layer between two carrier plates at least one of which carrier plates is provided with a layer (orientation layer) which orientates the liquid crystal layer and whose surface possesses a pattern of parallel grooves, characterised in that the spacing between adjacent grooves (" structure constant ") is in the order magnitude of the wavelength of the illuminating light, and that the orientation layer (10, 11) displays strips which run parallel to the grooves and consist of an electrically conductive or a dichroic material and which are spaced from one another by a distance corresponding to the structure constant.

2. A liquid crystal display device as claimed in Claim 1, characterised in that the strips are located within the orientation layer (10, 11).

3. A liquid crystal display device as claimed in Claim 1, characterised in that the strips are located on the surface of the orientation layer (10, 11).

4. A liquid crystal display device as claimed in Claim 2, characterised in that the strips consist of an electrically-conductive photo-lacquer.

5. A liquid crystal display device as claimed in Claim 2, characterised in that the strips contain a conductive additive, in particular, silver or gold.

6. A liquid crystal display device as claimed in one of the Claims 1 to 5, characterised in that the orientation layer (10, 11) exhibits additional projections, in particular, regular dis-continuances of the grooves.

7. A liquid crystal display device as claimed in one of the Claims 1 to 6, characterised in that the liquid crystal display device comprises a rotary cell.

8. A liquid crystal display device as claimed in one of the Claims 1 to 7, characterised in that the liquid crystal display device comprises a fluorescence body (2) which consists of a material having a refractive index greater thant 1, which contains fluorescent particles and which is provided with light emergence windows (13) which are assigned to the display segments, ant that the control element controls the electrode segments in a complementary manner.

9. A process for the production of a liquid crystal display device as claimed in one of the Claims 1 to 8, characterised in that, in order to produce the orientation layer (10, 11), the carrier plate (3, 4) is coated with a light-sensitive material and the grooved pattern is produced therein by illumination with interfering coherent light sources, the radiation from which has frequencies in the far UV-range, or in the range of soft-X-radiation.

10. A process as claimed in Claim 9, characterised in that the strips are produced by an oblique vapour-deposition of conductive or dichroic material onto the orientation layer (10, 11).

## Revendications

1. Dispositif d'affichage à cristal liquide, du type comportant une couche de cristal liquide entre deux plaques de support dont l'une au moins est pourvue d'une couche orientant la couche de cristal (couche d'orientation) et dont la surface présente un modèle constitué par des rainures parallèles entre elles, caractérisé par le fait que la distance entre les rainures voisines (constante de structure) est de l'ordre de grandeur de la longueur d'onde de la lumière d'éclairage et que la couche d'orientation (10, 11) présente des bandes qui s'étendent parallèlement aux rainures, qui sont faites avec un matériau électriquement conducteur ou dichroïque et qui sont écartées entre elles d'une distance qui correspond à la constante de structure.

2. Dispositif d'affichage à cristal liquide selon la revendication 1, caractérisé par le fait que les bandes se situent à l'intérieur de la couche d'orientation (10, 11).

3. Dispositif d'affichage à cristal liquide selon la revendication 1, caractérisé par le fait que les bandes sont situées sur la surface de la couche d'orientation (10, 11).

4. Dispositif d'affichage à cristal liquide selon la revendication 2, caractérisé par le fait que les bandes sont constituées avec un vernis photosensible électriquement conducteur.

5. Dispositif d'affichage à cristal liquide selon la revendication 2, caractérisé par le fait que les bandes comportent une addition conductrice, plus particulièrement de l'argent ou de l'or.

6. Dispositif d'affichage à cristal liquide selon l'une des revendications 1 à 5, caractérisé par le fait que la couche d'orientation (10, 11) présente des protubérances supplémentaires, plus particulièrement des interruptions régulières des rainures.

7. Dispositif d'affichage à cristal liquide selon l'une des renvendications 1 à 6, caractérisé par le fait qu'il comporte une cellule de rotation.

8. Dispositif d'affignage à cristal liquide selon l'une des revendications 1 à 7, caractérisé par le fait qu'il comporte un corps fluorescent (2) en une matière à indice de réfraction supérieur à 1, qui contient des particules fluorescentes et qui présente des fenêtres de sortie de la lumière (13) associées aux segments d'affichage et que la partie d'attaque attaque de façon complémentaire les segments d'électrodes.

9. Procédé pour la réalisation d'un dispositif d'affichage à cristal liquide selon l'une des revendications 1 à 8, caractérisé par le fait que pour réaliser la couche d'orientation (10, 11) on recouvre la plaque de support (3, 4) d'un matériau photosensible et que l'on y produit le modèle de rainures par éclairage à l'aide de sources de lumières cohérentes et interférant entre elles, et dont les rayonnements se situent dans la plage des UV ou des rayons X mous.

10. Procédé selon la revendication 9, caractérisé par le fait que l'on réalise des bandes par vaporisation oblique sur la couche d'orientation (10, 11) d'un matériau conducteur ou dichroïque.